(19) Europäisches Patentamt
European Patent Office
Office européen des brevets

(11) **EP 2 461 971 B1**

(12) **EUROPÄISCHE PATENTSCHRIFT**

(45) Veröffentlichungstag und Bekanntmachung des Hinweises auf die Patenterteilung:
**19.08.2015   Patentblatt 2015/34**

(21) Anmeldenummer: **10736638.7**

(22) Anmeldetag: **23.07.2010**

(51) Int Cl.:
*B32B 5/18* (2006.01)          *B32B 15/08* (2006.01)
*B32B 27/08* (2006.01)        *B32B 27/40* (2006.01)
*C08G 18/42* (2006.01)        *C08G 63/20* (2006.01)
*C09D 5/00* (2006.01)          *C09D 167/00* (2006.01)
*C09D 171/00* (2006.01)      *C09D 175/00* (2006.01)
*C09D 183/00* (2006.01)

(86) Internationale Anmeldenummer:
**PCT/EP2010/004591**

(87) Internationale Veröffentlichungsnummer:
**WO 2011/015299 (10.02.2011 Gazette 2011/06)**

(54) **VERFAHREN ZUR HERSTELLUNG EINES SCHAUMSTOFF-VERBUNDELEMENTS**

METHOD FOR PRODUCING A FOAM COMPOSITE ELEMENT

PROCÉDÉ DE FABRICATION D'UN ÉLÉMENT COMPOSITE EN MOUSSE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **05.08.2009   EP 09010091**
**06.07.2010   EP 10168524**

(43) Veröffentlichungstag der Anmeldung:
**13.06.2012   Patentblatt 2012/24**

(73) Patentinhaber: **Bayer Intellectual Property GmbH 40789 Monheim (DE)**

(72) Erfinder:
• **VAN DE BRAAK, Johannes**
**53773 Hennef (DE)**

• **ROERS, Rolf**
**51519 Odenthal (DE)**
• **HAAS, Peter**
**42781 Haan (DE)**

(74) Vertreter: **BIP Patents**
**c/o Bayer Intellectual Property GmbH**
**Alfred-Nobel-Straße 10**
**40789 Monheim am Rhein (DE)**

(56) Entgegenhaltungen:
**EP-A1- 1 516 720          EP-A2- 1 593 438**
**WO-A1-2006/029786      WO-A2-2009/047269**
**DE-A1- 10 022 280**

**Beschreibung**

Die Erfindung betrifft ein Verfahren zur Herstellung eines Schaumstoff-Verbundelements, umfassend die Schritte des Bereitstellens einer Deckschicht, des Auftragens von Haftvermittler auf die Deckschicht, und des Auftragens einer Polyurethan und/oder Polyisocyanurat umfassenden Schaumstoffschicht auf den Haftvermittler, dadurch gekennzeichnet, dass der Haftvermittler aus mindestens einer Verbindung ausgewählt aus der Gruppe bestehend aus Polyetherpolyol (B.1), Polyharnstoffdispersion (B.3) und Polyesterpolyol (B.4) besteht, wobei das Polyetherpolyol (B.1) ausgewählt ist aus mindestens einer Verbindung ausgewählt aus der Gruppe bestehend aus Polyoxypropylenpolyolen, Polyoxypropylen-polyoxyethylenpolyolen und Polyethercarbonatpolyolen. Die Erfindung betrifft weiterhin die Verwendung mindestens einer Verbindung ausgewählt aus der Gruppe bestehend aus Polyetherpolyol (B.1), Polyharnstoffdispersion (B.3) und Polyesterpolyol (B.4), wobei das Polyetherpolyol (B.1) ausgewählt ist aus mindestens einer Verbindung ausgewählt aus der Gruppe bestehend aus Polyoxypropylenpolyolen, Polyoxypropylen-polyoxyethylenpolyolen und Polyethercarbonatpolyolen, als Haftvermittler in der Herstellung von Schaumstoff-Verbundelementen sowie durch das erfindungsgemäße Verfahren erhaltene Schaumstoff-Verbundelemente.

Für die kontinuierliche Fertigung von Metallsandwichelementen auf der Basis von Polyurethan-Hartschaumstoffen, also sowohl Polyurethan- als auch Polyisocyanurat-Hartschaumstoffen, ist die Haftfestigkeit von metallischer Deckschicht zum Schaum wichtig, insbesondere wenn es sich bei dem Schaum um einen Polyisocyanurat-Schaum handelt. Im Markt etabliert sind Zweikomponenten-Polyurethan-Haftvermittlersysteme. Die Haftfestigkeiten durch Einsatz solcher Zweikomponenten-Haftvermittlersysteme werden prinzipiell deutlich verbessert, was für die Hersteller der Fertigteile eine Produktverbesserung bedeutet. Insbesondere werden die Langzeitrisiken für ein Haftungsversagen massiv reduziert.

Allerdings können bei der Verarbeitung solcher Zweikomponenten-Haftvermittlersysteme Schwierigkeiten mit einer ausreichenden Homogenisierung der Haftvermittlerkomponenten auftreten. Eine unzureichende Homogenisierung kann im Hinblick auf die Langzeit-Verbundeigenschaften der Metallverbundelemente ein hohes Risiko bedeuten, und zwar in der Weise, dass es bei wechselnden Temperaturen zu Haftungsversagen von Deckschicht zum Schaum kommen kann. Weiterhin kann die Verarbeitung eines Zweikomponenten-Haftvermittlersystems einen relativ hohen Ausschuss zu Beginn einer Produktionsphase bedeuten.

Zur Vermeidung des Risikos mangelhafter Verbundeigenschaften aufgrund nicht ausreichender Homogenisierung der beiden Haftvermittlerkomponenten bieten sich Einkomponenten-Lösungen an. Beispielsweise offenbart EP 1 516 720 A1 die Verwendung eines Polyurethan-Haftvermittlers zur Verbesserung der Haftung zwischen den Schichten eines Verbundelements, enthaltend einen Polyisocyanurat-Schaumstoff und Deckschichten, sowie die Verbundelemente als solche und ein Verfahren zu ihrer Herstellung.

EP 1 593 438 A2 offenbart eine Vorrichtung und Verfahren zur Herstellung von Sandwich-Verbundelementen. Die Vorrichtung besteht wenigstens aus zwei Zuführvorrichtungen für Deckschichten, an die eine Auftragsvorrichtung für einen Haftvermittler, eine Auftragsvorrichtung für eine Kernschicht, eine Fördervorrichtung und eine Ablenkvorrichtung hintereinander geschaltet sind. Die Auftragsvorrichtung für den Haftvermittler besteht wenigstens aus einer Zuführleitung für den Haftvermittler, einen Drehteller mit mindestens einer seitlichen Austrittsöffnung sowie einem Antrieb für den Drehteller. Als Haftvermittler können Einkomponentensysteme, zum Beispiel auf der Basis von Polyurethan, wie NCO-Gruppen enthaltende Prepolymere, eingesetzt werden. Weitere mögliche Einkomponentensysteme basieren auf Polychloropren, Epoxid oder Polyvinylacetat. Der Haftvermittler kann auch aus einem Mehrkomponentensystem, bevorzugt aus einem Zweikomponentensystem aufgebaut sein. Bevorzugte Zweikomponentensysteme sind Polyurethansysteme.

Eine ständige Aufgabe ist die Verbesserung der Haftung zwischen dem Schaum und den Deckschichten in Schaumstoff-Verbundelementen. Es besteht folglich der Bedarf an alternativen und verbesserten Verfahren zur Herstellung dieser Verbundelemente, die insbesondere eine verbesserte Haftung zwischen dem Schaum und den Deckschichten in Schaumstoff-Verbundelementen bei gleichzeitig Auftreten von höchstens leichten Störungen im Grenzbereich Schaum/Deckschicht ermöglichen.

Gegenstand der Erfindung ist daher ein Verfahren zur Herstellung eines Schaumstoff-Verbundelements, umfassend die Schritte:

A) Bereitstellen einer Deckschicht;
B) Auftragen von Haftvermittler auf die Deckschicht, und
C) Auftragen einer Polyurethan und/oder Polyisocyanurat umfassenden Schaumstoffschicht auf die Polyolverbindung,

dadurch gekennzeichnet dass der Haftvermittler aus mindestens einer Verbindung ausgewählt aus der Gruppe bestehend aus Polyetherpolyol (B.1), Polyharnstoffdispersion (B.3) und Polyesterpolyol (B.4), wobei das Polyetherpolyol (B.1) ausgewählt ist aus mindestens einer Verbindung ausgewählt aus der Gruppe bestehend aus Polyoxypropylenpolyolen, Polyoxypropylen-polyoxyethylenpolyolen und Polyethercarbonatpolyolen.

Es wurde gefunden, dass durch den Einsatz von Polyetherpolyol (B.1), Polyharnstoffdispersion (B.3) und Polyesterpolyol (B.4), wobei das Polyetherpolyol (B.1) ausgewählt ist aus mindestens einer Verbindung ausgewählt aus der Gruppe bestehend aus Polyoxypropylenpolyolen, Polyoxypropylen-polyoxyethylenpolyolen und Polyethercarbonatpolyolen, als Haftvermittler die Haftung des Schaums an der Deckschicht gegenüber bekannten Systemen verbessert werden konnte. Gemäß der vorliegenden Erfindung wird also neben dem erfindungsgemäßen Haftvermittler, der aus mindestens einer Verbindung ausgewählt aus der Gruppe bestehend aus Polyetherpolyol (B.1), Polyharnstoffdispersion (B.3) und Polyesterpolyol (B.4) besteht, wobei das Polyetherpolyol (B.1) ausgewählt ist aus mindestens einer Verbindung ausgewählt aus der Gruppe bestehend aus Polyoxypropylenpolyolen, Polyoxypropylen-polyoxyethylenpolyolen und Polyethercarbonatpolyolen, kein weiterer Haftvermittler eingesetzt. Insbesondere können durch die alleinige Verwendung von den erfindungsgemäßen Haftvermittlern Probleme vermieden werden, die auf unzureichend gemischte Zwei-Komponenten-Haftvermittlersystemen vermeiden werden. Unzureichend gemischte Haftvermittlersysteme würden zur Blasenbildung oder zu Sollbruchstellen im Verbundmaterial führen. Vorteilhafterweise ermöglicht die alleinige Verwendung von Polyolverbindungen auch eine ganzflächige Benetzung der Deckschicht.

Die erfindungsgemäß hergestellten Schaumstoff-Verbundelemente eignen sich insbesondere als Wärmedämmelemente.

Schritt A) des erfindungsgemäßen Verfahrens betrifft das Bereitstellen einer Deckschicht. Dieses kann in kontinuierlichen Produktionsanlagen beispielsweise durch Abwickeln einer aufgerollten Deckschicht von einer Rolle geschehen. Die Art der Deckschicht ist zunächst nicht weiter festgelegt, wobei bevorzugt die im Bereich der Wärmeisolierung üblicherweise eingesetzten Materialien für Deckschichten verwendet werden können. Die Dicke der Deckschicht kann beispielsweise $\geq 200\ \mu m$ bis $\leq 5$ mm, bevorzugt $\geq 300\ \mu m$ bis $\leq 2$ mm und besonders bevorzugt $\geq 400\ \mu m$ bis $\leq 1$ mm betragen.

In Schritt B) wird der erfindungsgemäße Haftvermittler auf eine bereitgestellte Deckschicht aufgetragen. Das Auftragen kann mit üblichen Techniken wie beispielsweise Aufsprühen oder Rollen erfolgen. Der erfindungsgemäße Haftvermittler besteht aus mindestens einer Verbindung ausgewählt aus der Gruppe bestehend aus Polyetherpolyol (B.1), Polyharnstoffdispersion (B.3) und Polyesterpolyol (B.4), wobei das Polyetherpolyol (B.1) ausgewählt ist aus mindestens einer Verbindung ausgewählt aus der Gruppe bestehend aus Polyoxypropylenpolyolen, Polyoxypropylen-polyoxyethylenpolyolen und Polyethercarbonatpolyolen.

Bevorzugt weist der erfindungsgemäße Haftvermittler eine Hydroxyl-Funktionalität von 1 bis 8, besonders bevorzugt von 2 bis 4, ganz besonders bevorzugt von 2 bis 3 auf.

Bevorzugt weist der erfindungsgemäße Haftvermittler eine Hydroxylzahl im Bereich von 15 bis 500, besonders bevorzugt von 20 bis 200 ganz besonders bevorzugt von 20 bis 60 auf.

Bevorzugt weist der erfindungsgemäße Haftvermittler eine Viskosität gemessen nach DIN 53015 bei einer Temperatur von 25 °C im Bereich zwischen 200 und 30000 mPa.s, besonders bevorzugt im Bereich zwischen 200 und 20000 mPa.s, ganz besonders bevorzugt im Bereich zwischen 200 und 10000 mPa.s, auf.

Als Haftvermittler werden Polyetherpolyole (B.1) eingesetzt, die nach bekanntem Verfahren hergestellt werden. Dies geschieht beispielsweise durch anionische Polymerisation mit Alkalihydroxiden, wie Natrium- oder Kaliumhydroxid, oder mit Alkalialkoholaten wie Natriummethylat, Natrium- oder Kaliummethylat oder Kaliumisopropylat, als Katalysatoren und unter Zusatz mindestens eines Startermoleküls, das 2 bis 8 vorzugsweise 2 bis 3 reaktive Wasserstoffatome gebunden enthält, zur Herstellung von Polyoxyalkylenpolyolen, oder durch kationische Polymerisation mit Lewis-Säuren, wie Antimonpentachlorid, Bortrifluorid-Etherat u.a. oder Bleicherde als Katalysatoren aus einem oder mehreren Alkylenoxiden mit 2 bis 4 Kohlenstoffatomen im Alkylenrest. Im Sinne der vorliegenden Erfindung enthalten die Polyetherpolyole B.1 keinen Füllstoff.

Erfindungsgemäß geeignete Alkylenoxide sind beispielsweise Ethylenoxid, 1,2-Propylenoxid Tetrahydrofuran, 1,3-Propylenoxid, 1,2- bzw. 2,3-Butylenoxid, und vorzugsweise Ethylenoxid und 1,2-Propylenoxid. Die Alkylenoxide können einzeln, alternierend nacheinander oder als Mischungen verwendet werden.

Als Startermoleküle werden bevorzugt Verbindungen ausgewählt aus der Gruppe bestehend aus Wasser, organische Dicarbonsäuren, wie Bernsteinsäure, Adipinsäure, Phthalsäure und Terephthalsäure, aliphatische und aromatische, gegebenenfalls N-mono, N,N- und N,N'-dialkylsubstituierte Diamine mit 1 bis 4 Kohlenstoffatomen im Alkylrest, wie gegebenenfalls mono-und dialkylensubstituiertes Ethylendiamin, Diethylentriamin, Triethylentetramin, 1,2-Propylenamin, 1,3- bzw. 1,4-Butylendiamin, 1,2-, 1,3-, 1,4-, 1,5- und 1,6 Hexamethylendiamin, Phenylendiamin, 2,3-, 3,4-, 2,4- und 2,6-Toluylendiamin und 4,4'-, 2,4'- und 2,2'-Diaminodiphenylmethan, Alkanolamin, wie z.B. Ethanolamin, N-Methyl- und N-Ethylethanolamin, Dialkanolamine, wie z.B. Diethanolamin, N-Methyl- und N-Ethyldiethanolamin und Trialkanolamine, wie z.B. Triethanolamin, und Ammoniak. Vorzugsweise verwendet werden mehrwertige, insbesondere zweibis achtwertige Alkohole und/oder Alkylenglykole wie z.B. Ethandiol, Propandiol-1,2 und -1,3, Diethylenglykol, Dipropylenglykol, Butandiol-1,4, Hexandiol-1,6, Glyzerin, Trimethylolpropan, Pentaerythrit, Sorbit und Sucrose sowie Mischungen aus mindestens zwei mehrwertigen Alkoholen.

Als Polyetherpoylole können auch Copolymere eingesetzt werden, die sich durch Anlagerung von Alkylenoxiden und einem weiteren Monomer (wie beispielsweise Anhydride, Kohlendioxid) an Startermoleküle herstellen lassen, wie beispielsweise Polyethercarbonatpolyole. Die Herstellung von Polyethercarbonatpolyolen durch katalytische Anlagerung von Alkylenoxiden und Kohlendioxid an H-funktionelle Startermolekülen ist beispielsweise in Inoue et al, Copolymerization of Carbon Dioxide and Epoxide with Organometallic Compounds; Die Makromolekulare Chemie 130, 210-220, 1969 beschrieben.

Die Polyetherpolyole sind vorzugsweise Polyoxypropylen- und Polyoxypropylenpolyoxyethylenpolyole. Die Polyetherpolyole weisen vorzugsweise eine Funktionalität von 2 bis 8 auf und besonders bevorzugt Hydroxylzahlen von 20 bis 500 auf.

Die Polyetherpolyole (B.1) können einzeln oder in Form von Mischungen mit weiteren Polyetherpolyolen oder in Form von Mischungen mit weiteren Haftvermittlern B.3 und B.4 verwendet werden. Vorzugsweise wird als Haftvermittler eine Mischung aus Polyetherpolyol (B.1) und Polyharnstoffdispersion (B.3) eingesetzt.

Bevorzugt weist das Polyetherpolyol eine Viskosität gemessen nach DIN 53015 bei einer Temperatur von 25 °C im Bereich zwischen 200 und 30000 mPa.s, besonders bevorzugt im Bereich zwischen 200 und 20000 mPa.s, ganz besonders bevorzugt im Bereich zwischen 200 und 10000 mPa.s, auf.

Als Haftvermittler werden erfindungsgemäß auch Polyharnstoffdispersionen (B.3) eingesetzt. Polyharnstoffdispersionen im erfindungsgemäßen Sinne sind füllstoffhaltige Polyetherpolyole, wobei der Füllstoff ein Reaktionsprodukt aus einem Di- und/oder Polyisocyanat mit Diaminen und/oder Hydrazin ist. Bevorzugt wird die Polyharnstoffdispersion durch Umsetzung von Diaminen und/oder Hydrazin mit Di- und/oder Polyisocyanaten in Gegenwart eines Polyetherpolyols gemäß Komponente B.1 erhalten (PHD-Dispersionen).

Die Polyharnstoffdispersionen gemäß Komponente B.3 (PHD-Dispersion) werden beispielsweise hergestellt durch *in situ* Polymerisation eines Di- und/oder Polyisocyanat oder einer Isocyanat-Mischung mit einem Diamin und/oder Hydrazin in einem Polyetherpolyol gemäß Komponente B.1. Vorzugsweise wird die PHD-Dispersion hergestellt durch Umsetzung einer Isocyanat-Mischung aus 75 bis 85 Gew.-% 2,4-Toluylendiisocyanat (2,4-TDI) und 15 bis 25 Gew.-% 2,6-Toluylendiisocyanat (2,6-TDI) mit einem Diamin und/oder Hydrazin in einem Polyetherpolyol gemäß B.1, vorzugsweise einem Polyetherpolyol hergestellt durch Alkoxylierung eines trifunktionellen Starters (wie beispielsweise Glycerin und/oder Trimethylolpropan). Verfahren zur Herstellung von PHD-Dispersionen sind beispielsweise beschrieben in US 4,089,835 und US 4,260,530.

Die Polyharnstoffdispersionen enthalten vorzugsweise einen Füllstoffgehalt von 1 bis 45 Gew.-%, besonders bevorzugt 5 bis 30 Gew.-%, ganz besonders bevorzugt 10 bis 25 Gew.-%.

Als Haftvermittler werden Polyesterpolyole (B.4) eingesetzt. Polyesterpolyole (B.4) werden insbesondere aus organischen Dicarbonsäuren mit 2 bis 12 Kohlenstoffatomen, vorzugsweise aliphatische Dicarbonsäuren mit 4 bis 6 Kohlenstoffatomen und mehrwertigen Alkoholen vorzugsweise Alkandiolen mit 2 bis 12 Kohlenstoffatomen, vorzugsweise 2 bis 6 Kohlenstoffatomen, Dialkylenglykolen und/oder Alkantriolen mit 3 bis 6 Kohlenstoffatomen hergestellt. Erfindungsgemäß eingesetzte Dicarbonsäuren werden bevorzugt ausgewählt aus der Gruppe bestehend aus Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch verwendet werden. Anstelle der Dicarbonsäuren können auch die entsprechenden Carbonsäurederivate wie beispielsweise Dicarbonsäureester von Alkoholen mit 1 bis 4 Kohlenstoffatomen oder Dicarbonsäureanhydride eingesetzt werden. Als zwei und mehrwertige Alkohole, insbesondere Alkandiole und Dialkylenglykole können erfindungsgemäß Verbindungen eingesetzt werden aus der Gruppe bestehend aus Ethandiol, Diethylenglykol, 1,2- bzw. 1,3-Propandiol, Dipropylenglykol, 1,4-Butandiol, 1,5-Pentandiol und 1,6-Hexandiol.

Eingesetzt werden können ferner Polyesterpolyole aus Lactonen, beispielsweise ε-Caprolacton oder Hydroxycarbonsäuren z.B. ω-Hydroxycapronsäure.

Zur Herstellung der Polyesterpolyole können die organischen z.B. aromatischen und vorzugsweise aliphatischen Dicarbonsäuren und/oder deren Derivate und die mehrwertigen Alkohole und/oder Alkylenglykole katalysatorfrei oder vorzugsweise in Gegenwart von Veresterungskatalysatoren, zweckmäßigerweise in einer Atmosphäre aus Inertgasen, wie z.B. Stickstoff, Helium, Argon u.a. in der Schmelze bei Temperaturen von 150 bis 250°C vorzugsweise 180 bis 220°C gegebenenfalls unter vermindertem Druck bis zu der gewünschten Säurezahl, die vorteilhafterweise kleiner als 10, vorzugsweise kleiner als 2 ist, polymerisiert werden.

Gemäß einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln wie z.B. Benzol, Toluol, Xylol oder Chlorbenzol, zur azeotropen Abdestillation des Kondensationswassers durchgeführt werden.

Zur Herstellung der Polyesterpolyole werden die organischen Dicarbonsäuren und/oder deren Derivate und die mehrwertigen Alkohole vorteilhafterweise im Molverhältnis von 1:1 bis 1,8, vorzugsweise 1:1,05 bis 1,2, polykondensiert. Die erhaltenen Polyesterpolyole weisen vorzugsweise eine Funktionalität von 2 bis 4, insbesondere 2 bis 3, und eine Hydroxylzahl von 20 bis 140, vorzugsweise 20 bis 40 auf.

Bevorzugt weist das Polyesterpolyol eine Viskosität gemessen nach DIN 53015 bei einer Temperatur von 25 °C im Bereich zwischen 200 und 30000 mPa.s, besonders bevorzugt im Bereich zwischen 200 und 20000 mPa.s, ganz besonders bevorzugt im Bereich zwischen 200 und 10000 mPa.s, auf.

Die Dicke der Schicht aus Haftvermittler kann beispielsweise $\geq 10 \ \mu m$ bis $\leq 500 \ \mu m$, vorzugsweise $\geq 20 \ \mu m$ bis $\leq 200 \ \mu m$ und besonders bevorzugt $\geq 25 \ \mu m$ bis $\leq 100 \ \mu m$ betragen.

Der Einsatz der Komponenten B.1, B.3, und/oder B.4 als Haftvermittler erlaubt Unterbrechungen bei der Produktion von Schaumstoff-Verbundelementen, ohne dass dadurch eine höhere Menge an Ausschuss produziert wird. Während konventionelle Haftvermittler auf Basis von 2-Komponentensystemen nach kurzer Zeit abreagiert sind, sind die Komponenten Komponenten B.1, B.3, und/oder B.4 als Haftvermittler in sich bzw. mit sich selber nicht reaktiv. Vorteilhafterweise kann daher die Produktion von Schaumstoff-Verbundelementen angehalten werden, sofern Probleme im Produktionsprozess auftreten, ohne dass große Mengen an Material verworfen werden müssen.

In Schritt C) wird auf die Schicht des Haftvermittlers (Komponenten B.1, B.3, und/oder B.4) eine Polyurethan und/oder Polyisocyanurat umfassende Schaumstoffschicht aufgetragen. Auch dieses kann in einer kontinuierlichen Produktionsanlage geschehen. Diese Schicht kann zum Beispiel in einer Dicke von $\geq 2 \ cm$ bis $\leq 28 \ cm$, von $\geq 3 \ cm$ bis $\leq 26 \ cm$ und vorzugsweise von $\geq 4 \ cm$ bis $\leq 24 \ cm$ vorliegen. Es können die Reaktionskomponenten erst unmittelbar vor dem Auftragen in einem Mischkopf vermischt werden und das zum Schaum führende Reaktionsgemisch unmittelbar auf die Schicht des Haftvermittlers aufgetragen werden. Insbesondere der Einsatz von Polyisocyanurat oder überwiegend Polyisocyanurat umfassenden Schäumen ist vorteilhaft, da diese auch mit einem reduzierten Gehalt an Flammschutzmitteln gute Flammschutzeigenschaften besitzen.

Zur Herstellung der Schaumstoffschicht kommen die üblichen aliphatischen, cycloaliphatischen und insbesondere aromatischen Polyisocyanate zum Einsatz. Bevorzugt verwendet werden Toluylendiisocyanat (TDI), Diphenylmethandiisocyanat (MDI) und insbesondere Gemische aus Diphenylmethandiisocyanat und Polyphenylenpolymethylenpolyisocyanaten (Roh-MDI). Als Verbindungen mit mindestens zwei gegenüber Isocyanatgruppen reaktiven Wasserstoffatomen kommen im Allgemeinen solche in Frage, die zwei oder mehrere reaktive Gruppen ausgewählt aus OH-Gruppen, SH-Gruppen, NH-Gruppen, $NH_2$-Gruppen und CH-aciden Gruppen wie $\beta$-Diketo-Gruppen im Molekül tragen. Vorzugsweise eingesetzt werden Polyetherole und/oder Polyesterole, wobei Polyetherpolyole bevorzugt sind. Die Hydroxylzahl der verwendeten Polyetherole und/oder Polyesterole beträgt vorzugsweise 25 bis 800 mg KOH/g, die Molmassen sind im Allgemeinen größer als 400 g/mol.

Es ist möglich, dass die Schaumstoffschicht, wobei allgemein auch der Schaum der Schaumstoffschicht verstanden werden soll, eine Geschlossenzelligkeit von $\geq 85\%$ bis $\leq 100\%$, vorzugsweise von $\geq 90\%$ bis $\leq 100\%$ aufweist, welche gemäß DIN ISO 4590 bestimmt werden kann. Weiterhin kann die Schaumstoffschicht einen mittleren Zelldurchmesser nach ASTM 3576-77 von $\geq 10 \ \mu m$ bis $\leq 600 \ \mu m$, bevorzugt von $\geq 50 \ \mu m$ bis $\leq 400 \ \mu m$, aufweisen.

Selbstverständlich können im erfindungsgemäßen Verfahren nach dem Schritt C) auf die Schaumstoffschicht eine weiteres Mal eine Schicht des Haftvermittlers wie in Schritt B) und daran anschließend eine weitere Deckschicht wie in Schritt A) beschrieben aufgetragen werden. Man erhält dann ein beidseitig mit einer Deckschicht versehenes Schaumstoff-Verbundelement. Das Verfahren kann beispielsweise in einer konventionellen Doppelbandanlage durchgeführt werden.

In einer Ausführungsform des erfindungsgemäßen Verfahrens umfasst das Material der Deckschicht Aluminium, Stahl, Bitumen, Papier, Mineral-Vliesstoffe, organische Fasern umfassende Vliesstoffe, Kunststoff-Platten, Kunststoff-Folien und/oder Holzplatten. Insbesondere bevorzugt ist es, wenn die Deckschicht Aluminium-Metall oder Stahl ist. Die Deckschicht, insbesondere das Aluminium bzw. der Stahl können dabei beschichtet sein. Die erfindungsgemäß eingesetzten Haftvermittler führen zu einer besonders guten Haftung insbesondere zwischen Polyisocyanurat-Schaumstoff und Aluminium-Deckschicht oder Stahl-Deckschicht.

In einer weiteren Ausführungsform des erfindungsgemäßen Verfahrens wird der Haftvermittler auf die Deckschicht in einer Menge von $\geq 20 \ g/m^2$ bis $\leq 50 \ g/m^2$ aufgetragen. Dieses stellt gegenüber bekannten Verfahren eine Verringerung der benötigten Menge an Haftvermittler dar. Die Menge der auf die Deckschicht aufgetragenen Haftvermittler kann auch in einem Bereich von $\geq 25 \ g/m^2$ bis $\leq 35 \ g/m^2$ liegen. Insgesamt ergibt sich hierbei also eine Materialersparnis (weniger Haftvermittler).

In einer weiteren Ausführungsform des erfindungsgemäßen Verfahrens wird die Deckschicht nach dem Auftragen des Haftvermittlers und des Reaktionsgemisches zum Herstellen der Schaumstoffschicht auf eine Temperatur von $\geq 20 \ °C$ bis $\leq 70 \ °C$, besonders bevorzugt von $\geq 40 \ °C$ bis $\leq 60 \ °C$ erwärmt. Durch das Erwärmen der Deckschicht wird die Reaktion des Haftvermittlers mit anderen Schichten beschleunigt und insgesamt eine festere Verbindung erhalten. Die Deckschicht kann vor dem Auftragen des Haftvermittlers auch besonders bevorzugt auf eine Temperatur von $\geq 45 \ °C$ bis $\leq 55 \ °C$ erwärmt werden.

In einer weiteren Ausführungsform des erfindungsgemäßen Verfahrens ist die Schaumstoffschicht erhältlich aus der Reaktion eines Polyisocyanate und wenigstens eine Verbindung ausgewählt aus der Gruppe bestehend aus Polyesterpolyolen und Polyetherpolyolen umfassenden Reaktionsgemisches, wobei im Reaktionsgemisch zu Beginn der Reaktion das molare Verhältnis von Isocyanatgruppen zu gegenüber Isocyanaten reaktiven Gruppen (wie beispielsweise Hydroxylgruppen) von $\geq$ 1:1 bis $\leq$ 5:1 beträgt. Im Allgemeinen wird dieser Sachverhalt durch die Kennzahl ausgedrückt. Die Kennzahl (auch als Index bezeichnet) gibt das prozentuale Verhältnis der tatsächlich eingesetzten IsocyanatMenge zur stöchiometrischen, d.h. berechneten Isocyanat-Gruppen (NCO)-Menge an:

$$\text{Kennzahl} = [(\text{Isocyanat-Menge eingesetzt}) : (\text{Isocyanat-Menge berechnet})] \bullet 100 \qquad (I)$$

Mit anderen Worten ausgedrückt, beträgt die Kennzahl dieser Reaktionsmischung 100 bis 500. Die Kennzahl kann auch $\geq$ 150 bis $\leq$ 350 oder $\geq$ 200 bis $\leq$ 300 betragen. Bei solchen Kennzahlen werden überwiegend Polyisocyanuratschäume erhalten, welche wie bereits ausgeführt mit geringeren Mengen an Flammschutzmitteln auskommen und durch das erfindungsgemäße Verfahren dennoch fest an Deckschichten, insbesondere Aluminiumdeckschichten, angebunden werden können. Der Polyisocyanuratschaumstoff ist vorzugsweise ein Hartschaumstoff, definiert anhand seiner Druckspannung bei 10% Stauchung beziehungsweise von $\geq$ 100 kPa bis $\leq$ 300 kPa. Diese Druckspannung oder Druckfestigkeit kann gemäß DIN 53421/DIN EN ISO 604 bestimmt werden. Sie kann auch in einem Bereich von $\geq$ 150 kPa bis $\leq$ 250 kPa oder von $\geq$ 180 kPa bis $\leq$ 280 kPa liegen.

Vorzugsweise wird im erfindungsgemäßen Verfahren, wobei die Schaumstoffschicht erhältlich ist aus der Reaktion mindestens eines Polyisocyanats und wenigstens Polyesterpolyol und gegebenenfalls Polyetherpolyol umfassenden Reaktionsgemisches bei einer Kennzahl von $\geq$ 150 bis $\leq$ 350, besonders bevorzugt $\geq$ 200 bis $\leq$ 300, als Haftvermittler eine Mischung aus Polyetherpolyol (B.1) und Polyharnstoffdispersion (B.3) eingesetzt, bevorzugt in einem Verhältnis B.1 zu B.3 von 3: 1 bis 1 : 3, und wobei bevorzugt der Feststoffgehalt der Haftvermittler-Mischung 10 bis 30 Gew.-% beträgt.

In einer weiteren Ausführungsform des erfindungsgemäßen Verfahrens beträgt die Rohdichte der Schaumstoffschicht $\geq$ 25 g/l bis $\leq$ 48 g/1, besonders bevorzugt $\geq$ 35 g/l bis $\leq$ 45 g/l. Sie kann anhand der Norm ISO 845 bestimmt werden. Es ist auch möglich, dass die Rohdichte ganz besonders bevorzugt $\geq$ 37 g/l bis $\leq$ 42 g/l, noch weiter bevorzugt $\geq$ 39 g/l bis $\leq$ 40 g/l beträgt. Unabhängig davon ist es weiterhin auch möglich, dass die Schaumstoffschicht, wobei allgemein auch der Schaum der Schaumstoffschicht verstanden werden soll, eine Geschlossenzelligkeit von $\geq$ 85% bis $\leq$ 100%, vorzugsweise von $\geq$ 90% bis $\leq$ 100% auf, welche gemäß DIN ISO 4590 bestimmt werden kann. Weiterhin kann die Schaumstoffschicht einen mittleren Zelldurchmesser nach ASTM 3576-77 von $\geq$ 10 $\mu$m bis $\leq$ 600 $\mu$m, bevorzugt von $\geq$ 50 $\mu$m bis $\leq$ 400 $\mu$m, aufweisen.

Die vorliegende Erfindung betrifft weiterhin die Verwendung mindestens einer Verbindung ausgewählt aus der Gruppe bestehend aus Polyetherpolyol (B.1) und Polyharnstoffdispersion (B.3) als Haftvermittler in der Herstellung von Schaumstoff-Verbundelementen. Details zu den als Haftvermittler verwendeten Polyetherpolyolen (B.1) und Polyharnstoffdispersionen (B.3) wurden bereits vorstehend beschrieben, so dass hierauf in vollem Umfang Bezug genommen werden kann.

Ein weiterer Gegenstand der vorliegenden Erfindung ist ein Schaumstoff-Verbundelement, erhalten durch ein erfindungsgemäßes Verfahren, wobei die Haftfestigkeit zwischen der Deckschicht und der Schaumstoffschicht $\geq$ 0,20 N/mm$^2$ bis $\leq$ 1,00 N/mm$^2$, besonders bevorzugt $\geq$ 0,20 N/mm$^2$ bis $\leq$ 0,50 N/mm$^2$, ganz besonders bevorzugt $\geq$ 0,20 N/mm$^2$ bis $\leq$ 0,30 N/mm$^2$, beträgt. Insbesondere kann die Schaumstoffschicht hierbei eine Polyisocyanurat-Schaumstoffschicht sein. Die Haftfestigkeit wird hierbei vorteilhafterweise in Anlehnung an DIN 53292 gemessen. Im praktischen Einsatz wird eine untere Grenze von 0,20 N/mm$^2$ als besonders vorteilhaft für eine ausreichende Haftfestigkeit angesehen.

Gegenstand der Erfindung ist somit auch ein Schaumstoffverbundelement, enthaltend die Schichten ($\alpha$) eine Deckschicht,

($\beta$) einen Haftvermittler bestehend aus mindestens einer Verbindung der Gruppe bestehend aus Polyetherpolyol (B.1), Polyharnstoffdispersion (B.3) und Polyesterpolyol (B.4), wobei das Polyetherpolyol (B.1) ausgewählt ist aus mindestens einer Verbindung ausgewählt aus der Gruppe bestehend aus Polyoxypropylenpolyolen, Polyoxypropylen-polyoxyethylenpolyolen und Polyethercarbonatpolyolen.

($\gamma$) einer Polyurethan und/oder Polyisocyanurat umfassenden Schaumstoffschicht,

wobei die Schichten in der Reihenfolge ($\alpha$)-($\beta$)-($\gamma$), vorzugsweise in der Reihenfolge ($\alpha$)-($\beta$)-($\gamma$)-($\beta$)-($\alpha$) angeordnet sind.

<u>Beispiele</u>

Es wurde die Haftfestigkeit in Anlehnung an die Norm DIN 53292 überprüft. Die Durchführung unterscheidet sich dabei vom Zugversuch senkrecht zur Deckschichtebene nach DIN 53292-82 durch die unterschiedliche Probendicke und Anzahl der Deckschichten. Beim Versuch nach DIN 53292-82 wird die gesamte Dicke der Deckschichten zugrunde gelegt. Dabei bestimmt der schwächste Bereich der Gesamtprobe den Bruchort. Demgegenüber erlaubt der Haftversuch in der hier beschriebenen Abwandlung eine seitenbezogene Beurteilung der Haftung. Zur Probenentnahme wird daher ein Verbundelement senkrecht zu den Deckschichten geschnitten. Bei der Messung werden quadratische Proben verwendet, deren Seitenlänge 50 mm und deren Probenhöhe 15 mm (einschließlich der Deckschicht) beträgt.

Zur Bestimmung der Störungen im Grenzbereich Schaum/Deckschicht ("Blasenbildung") wurde das Metallverbundelements für 1 h bei 105 °C getempert. Dann wurde die obere bzw. untere Deckschicht des Metallverbundelements entfernt. Es wird geprüft, ob neben der regulären Zellstruktur des Polyurethan-Hartschaumstoffs Kollaps-Kavitäten auftreten.

| | |
|---|---|
| Keine Störung: | Keine Kollaps-Kavitäten. |
| leichte Störung: | Anzahl der Kollaps-Kavitäten: von 1 bis weniger als 5 Stück mit jeweils einem Durchmesser von weniger als 5 mm. |
| Mittlere Störung: | Anzahl der Kollaps-Kavitäten von 5 bis weniger als 10 Stück und/oder Durchmesser der Kollaps-Kavitäten von 5 bis 10 mm. |
| Starke Störung: | Anzahl der Kollaps-Kavitäten von mindestens 10 Stück und/oder Durchmesser: der Kollaps-Kavitäten von größer als 10 mm. |

Folgende Haftvermittler wurden in den Beispielen eingesetzt:

Haftvermittler HV A: Polyharnstoffdispersion auf Basis eines Polyetherpolyols aus Glycerin, Ethylenoxid, und Propylenoxid, mit einer Funktionalität von 3 und einer Hydroxylzahl von 28 mg KOH/g.

Haftvermittler HV B: Polymerpolyol auf Basis eines Polyetherpolyols aus Glycerin, Ethylenoxid, und Propylenoxid, mit einer Funktionalität von 3 und einer Hydroxylzahl von 28 mg KOH/g, enthaltend 20 Gewichtsprozent eines Füllstoffs auf Basis SAN (60/40)

Haftvermittler HV C: Polymerpolyol auf Basis eines Polyetherpolyols aus Glycerin, Ethylenoxid, und Propylenoxid, mit einer Funktionalität von 3 und einer Hydroxylzahl von 20 mg KOH/g, enthaltend 43 Gewichtsprozent eines Füllstoffs auf Basis SAN (60/40)

Haftvermittler HV D: Eine Mischung bestehend aus 50 Gewichtsprozent des Haftvermittlers HV C und 50 Gewichtsprozent eines Polyetherpolyols aus Glycerin, Ethylenoxid, und Propylenoxid, mit einer Funktionalität von 3 und einer Hydroxylzahl von 28 mg KOH/g.

Haftvermittler HV E: Polyetherpolyol aus Glycerin, Ethylenoxid, und Propylenoxid, mit einer Funktionalität von 3 und einer Hydroxylzahl von 28 mg KOH/g.

Beispiele 1 bis 6:

Schaumsystem 1:

a-Komponente:

39 Gewichtsteile Polyetheresterpolyol 1 (hergestellt, indem in einer ersten Stufe Phthalsäureanhydrid, Diethylenglycol und Ethylenglycol zu einem Polyesterpolyol umgesetzt wurden, welches in einer zweiten Stufe mit Ethylenoxid kettenverlängert wurde. Das resultierende Polyetheresterpolyol 1 wies eine Funktionalität von 2 und eine Hydroxylzahl von 310 mg KOH/g auf);

15,7 Gewichtsteile Polyetherpolyol 1 (hergestellt aus Propylenglycol als Starterverbindung und Propylenoxid und Ethylenoxid; das resultierende Polyetherpolyol 1 wies eine Funktionalität von 2 und eine Hydroxylzahl von 28 mg KOH/g auf);

12 Gewichtsteile Polyetherpolyol 2 (hergestellt aus Zucker und Ethylenglycol als Starterverbindungen sowie Propylenoxid, das resultierende Polyetherpolyol 1 wies eine Funktionalität von 3 und einer Hydroxylzahl von 380 mg KOH/g auf);

25 Gewichtsteile Flammschutzmittel 1 (Trischlorisopropylphosphat, TCPP);

5 Gewichtsteile Stabilisator 1 (silikonhaltiger Stabilisator);

2,5 Gewichtsteile Polyesterpolyol 1 (hergestellt aus Phthalsäureanhydrid und Diethylenglycol; das resultierende Polyesterpolyol 1 wies eine Hydroxylzahl von OH-Zahl 795, mg KOH/g auf);

0,8 Gewichtsteile Wasser.

b-Komponente:

Desmodur 44V70L (polymeres MDI, erhältlich von Bayer Material Science AG).

Die a- und b-Komponente wurden im Verhältnis a:b = 100:200 miteinander vermischt. Für die Herstellung eines Metallverbundelements in 200 mm Dicke wurden als Treibmittel darüber hinaus 13 Gewichtsteile Pentan zugesetzt, sowie 3 Gewichtsteile des Trimerisierungskatalysators Kaliumacetat und 0,6 Gewichtsteile einer Mischung aus 76 Gew.-% Cyclohexyldimethylamin und 24 Gew.-% Pentamethyltriethylendiamin, wobei sich diese Angaben der Gewichtsteile auf 100 Gewichtsteile der Komponente A beziehen.

Die Haftvermittlerzusammensetzung wurde auf ein auf 40 °C vorgewärmtes Stahlblech mit einer Vorrichtung, wie sie in EP 1 593 438 A2 beschrieben wird, aufgetragen. Die Menge an eingesetztem Haftvermittler ist in der Tabelle 1 jeweils angegeben. Anschließend wurde hierauf ein Polyisocyanuratschaum aufgetragen mit der zuvor genannten Zusammensetzung gemäß Schaumsystem 1.

Tabelle 1. Versuche mit Schaumsystem 1

| Beispiel | Haftvermittler | Auftragsmenge Haftvermittler [g/m$^2$] | Haftfestigkeit [N/mm$^2$] | Blasenbildung |
|---|---|---|---|---|
| 1 (Vgl.) | Ohne Haftvermittler | - | 0,13 | keine |
| 2 | HVA | 32 | 0,25 | keine |
| 3 | HVB | 39 | 0,16 | keine |
| 4 | HVC | 32 | 0,19 | starke |
| 5 | HVD | 45 | 0,27 | leichte |
| 6 | HVE | 34 | 0,18 | leichte |
| Vgl. = Vergleichsbeispiel | | | | |

In den Versuchen der Beispiele 2 bis 6 zeigt sich, dass durch Einsatz von Polyetherpolyolen als Haftvermittler eine Verbesserung der Haftfestigkeiten erreicht wird.

Beispiele 7 bis 10:

Schaumsystem 2:

a-Komponente:

63,8 Gewichtsteile eines Polyesterpolyols 2 (hergestellt aus Phthalsäureanhydrid, Adipinsäure, Monoethylenglykol und Diethylenglykol; Das resultierende Polyesterpolyol 2 wies eine Hydroxylzahl von 240 mg KOH/g auf);
5 Gewichtsteile eines Polyetherpolyols 2 (hergestelt aus Trimethylolpropan als Starterverbindung und Ethylenoxid; das resultierende Polyetherpolyol 2 wies eine Funktionalität von 3 und eine OH-Zahl 240 mg KOH/g auf);
2,2 Gewichtsteile eines Polyesterpolyols 1 (hergestellt aus Phthalsäureanhydrid und Diethylenglykol; das resultierende Polyesterpolyol 1 wies eine Hydroxylzahl von OH-Zahl 795 mg KOH/g auf);
20 Gewichtsteile Flammschutzmittel TCPP;
5 Gewichtsteile Flammschutzmittel TEP;
4 Gewichtsteile Siliconhaltiger Stabilisator.

b-Komponente:

Desmodur 44V70L (polymeres MDI, erhältlich von Bayer Material Science AG).

Die a- und b-Komponente wurden im Verhältnis a:b = 100:160 miteinander vermischt. Für die Herstellung eines Metallverbundelements in 40 mm Dicke wurden als Treibmittel darüber hinaus 15 Gewichtsteile Pentan zugesetzt, sowie 5 Gewichtsteile des Trimerisierungskatalysators Kaliumoctoat, wobei sich diese Angaben der Gewichtsteile auf 100 Gewichtsteile der Komponente A beziehen.

Die Haftvermittlerzusammensetzung wurde auf ein auf 40 °C vorgewärmte Stahlblech mittels Sprühpistole aufgetragen. Die Menge an eingesetztem Haftvermittler ist in der Tabelle 2 jeweils angegeben. Anschließend wurde hierauf ein Polyisocyanuratschaum aufgetragen mit der zuvor genannten Zusammensetzung gemäß Schaumsystem 2.

Tabelle 2. Haftfestigkeitsversuche mit Schaumsystem 2.

| Beispiel | Haftvermittler | Auftragsmenge Haftvermittler [g/m$^2$] | Haftfestigkeit [N/mm$^2$] | Blasenbildung |
|---|---|---|---|---|
| 7 (Vgl.) | ohne Haftvermittler | - | 0,17 | leichte [1] |
| 8 | HVD | 18 | 0,20 | Keine |
| 9 | HVD | 25 | 0,34 | Keine |
| 10 | HVD | 32 | 0,20 | Keine |
| Vgl. = Vergleichsbeispiel [1] leichte Störungen im Grenzbereich Schaum/Stahlblech (Produktionsunterseite) | | | | |

In der Versuchsserie mit Schaumsystem 2 zeigten sich nach der Temperung der Verbundelemente im Referenzversuch ohne Haftvermittler leichte Störungen im Grenzbereich Schaum/Stahlblech an der Produktionsunterseite.

Der für eine Standardpanelproduktion vorteilhafte Haftfestigkeitswert von mindestens 0,2 N/mm$^2$ wird mit Haftvermittler D im Schaumsystem 2 erreicht (Beispiele 8 bis 10).

**Patentansprüche**

1.  Verfahren zur Herstellung eines Schaumstoff-Verbundelements, umfassend die Schritte:

     A) Bereitstellen einer Deckschicht;
     B) Auftragen von Haftvermittler auf die Deckschicht, und
     C) Auftragen einer Polyurethan und/oder Polyisocyanurat umfassenden Schaumstoffschicht auf den Haftvermittler,

     **dadurch gekennzeichnet dass** der Haftvermittler aus mindestens einer Verbindung ausgewählt aus der Gruppe bestehend aus Polyetherpolyol (B.1), Polyharnstoffdispersion (B.3) und Polyesterpolyol (B.4) , wobei das Polyetherpolyol (B.1) ausgewählt ist aus mindestens einer Verbindung ausgewählt aus der Gruppe bestehend aus Polyoxypropylenpolyolen, Polyoxypropylen-polyoxyethylenpolyolen und Polyethercarbonatpolyolen, besteht.

2.  Verfahren gemäß Anspruch 1, wobei das Material der Deckschicht Aluminium, Stahl, Bitumen, Papier, Mineral-Vliesstoffe, organische Fasern umfassende Vliesstoffe, Kunststoff-Platten, Kunststoff-Folien und/oder Holzplatten umfasst.

3.  Verfahren nach Anspruch 1, wobei der Haftvermittler eine Hydroxyl-Funktionalität von 2 bis 8 aufweist.

4.  Verfahren nach Anspruch 1, wobei der Haftvermittler eine Hydroxylzahl im Bereich von 15 bis 500 aufweist.

5.  Verfahren nach einem oder mehreren der Ansprüche 1 bis 4, wobei der Haftvermittler aus mindestens einer Verbindung ausgewählt aus der Gruppe bestehend aus Polyetherpolyol (B.1) besteht.

6.  Verfahren gemäß Anspruch 1, wobei der Haftvermittler auf die Deckschicht in einer Menge von $\geq$ 20 g/m$^2$ bis $\leq$ 50 g/m$^2$ aufgetragen wird.

7.  Verfahren gemäß Anspruch 1, wobei die Deckschicht vor dem Auftragen des Haftvermittlers auf eine Temperatur von $\geq$ 20 °C bis $\leq$ 70 °C erwärmt wird.

8.  Verfahren gemäß Anspruch 1, wobei die Schaumstoffschicht erhältlich ist aus der Reaktion eines Polyisocyanate und wenigstens eine Verbindung ausgewählt aus der Gruppe bestehend Polyesterpolyolen und Polyetherpolyolen umfassenden Reaktionsgemisches, wobei im Reaktionsgemisch zu Beginn der Reaktion das molare Verhältnis von Isocyanat-Gruppen zu Hydroxyl-Gruppen $\geq$ 100:100 bis $\leq$ 400:100 beträgt.

9.  Verfahren gemäß Anspruch 1, wobei die Rohdichte der Schaumstoffschicht $\geq$ 30 g/l bis $\leq$ 48 g/l beträgt.

**10.** Schaumstoffverbundelement, enthaltend die Schichten (α) eine Deckschicht, (β) einen Haftvermittler bestehend aus mindestens einer Verbindung der Gruppe bestehend aus Polyetherpolyol (B.1), Polyharnstoffdispersion (B.3), Polyesterpolyol (B.4), und (γ) einer Polyurethan und/oder Polyisocyanurat umfassenden Schaumstoffschicht, wobei die Schichten in der Reihenfolge (α)-(β)-(γ) angeordnet sind und wobei das Polyetherpolyol (B.1) ausgewählt ist aus mindestens einer Verbindung ausgewählt aus der Gruppe bestehend aus Polyoxypropylenpolyolen, Polyoxypropylen-polyoxyethylenpolyolen und Polyethercarbonatpolyolen.

**11.** Schaumstoffverbundelement gemäß Anspruch 10, wobei die Schichten in der Reihenfolge (α)-(β)-(γ)-(β)-(α) angeordnet sind.

**Claims**

**1.** Process for the production of a foam composite element, comprising the steps:

> A) providing a facing;
> B) applying adhesion promoter to the facing, and
> C) applying a foam layer comprising polyurethane and/or polyisocyanurate to the adhesion promoter,

**characterised in that** the adhesion promoter consists of at least one compound selected from the group consisting of polyether polyol (B.1) , polyurea dispersion (B.3) and polyester polyol (B.4), where the polyether polyol (B.1) is selected from at least one compound selected from the group consisting of polyoxypropylene polyols, polyoxypropylene polyoxyethylene polyols and polyether carbonate polyols.

**2.** Process according to claim 1, wherein the material of the facing comprises aluminium, steel, bitumen, paper, mineral nonwovens, nonwovens comprising organic fibres, plastics sheets, plastics films and/or wood plates.

**3.** Process according to claim 1, wherein the adhesion promoter has a hydroxyl functionality of from 2 to 8.

**4.** Process according to claim 1, wherein the adhesion promoter has a hydroxyl number in the range from 15 to 500.

**5.** Process according to one or more of claims 1 to 4, wherein the adhesion promoter consists of at least one compound selected from the group consisting of polyether polyol (B.1) .

**6.** Process according to claim 1, wherein the adhesion promoter is applied to the facing in an amount of from $\geq$ 20 g/m$^2$ to $\leq$ 50 g/m$^2$.

**7.** Process according to claim 1, wherein the facing is heated to a temperature of from $\geq$ 20°C to $\leq$ 70°C before the adhesion promoter is applied.

**8.** Process according to claim 1, wherein the foam layer is obtainable from the reaction of a polyisocyanate and at least one compound selected from the group consisting of reaction mixtures comprising polyester polyols and polyether polyols, wherein the molar ratio of isocyanate groups to hydroxyl groups in the reaction mixture at the start of the reaction is from $\geq$ 100:100 to $\leq$ 400:100.

**9.** Process according to claim 1, wherein the apparent density of the foam layer is from $\geq$ 30 g/l to $\leq$ 48 g/l.

**10.** Foam composite element containing the layers (α) a facing, (β) an adhesion promoter consisting of at least one compound from the group consisting of polyether polyol (B.1), polyurea dispersion (B.3), polyester polyol (B.4), and (γ) a foam layer comprising polyurethane and/or comprising polyisocyanurate, where the layers are arranged in the sequence (α)-(β)-(γ), and where the polyether polyol (B.1) is selected from at least one compound selected from the group consisting of polyoxypropylene polyols, polyoxypropylene polyoxyethylene polyols and polyether carbonate polyols.

**11.** Foam composite element according to claim 10, wherein the layers are arranged in the sequence (α)-(β)-(γ)-(β)-(α).

**Revendications**

1. Procédé pour la production d'un élément composite à base de mousse, comprenant les étapes:

   A) disposition d'une couche de recouvrement ;
   B) application d'un agent d'adhérence sur la couche de recouvrement, et
   C) application sur l'agent d'adhérence d'une couche de mousse comportant du polyuréthane et/ou du polyisocyanate,

   **caractérisé en ce que** l'agent d'adhérence consiste en au moins un composé choisi dans le groupe constitué par un polyétherpolyol (B.1), une dispersion de polyurée (B.3), et un polyesterpolyol (B.4), le polyétherpolyol (B.1) étant choisi parmi au moins un composé choisi dans le groupe constitué par des polyoxypropylènepolyols, polyoxypropylène-polyoxyéthylènepolyols et polyéthercarbonatepolyols.

2. Procédé selon la revendication 1, dans lequel le matériau de la couche de recouvrement comprend l'aluminium, l'acier, le bitume, le papier, des non-tissés comprenant une matière minérale, des non-tissés comprenant des fibres organiques, des plaques de matière plastique, des films de matière plastique et/ou des panneaux de bois.

3. Procédé selon la revendication 1, dans lequel l'agent d'adhérence présente une fonctionnalité hydroxy de 2 à 8.

4. Procédé selon la revendication 1, dans lequel l'agent d'adhérence présente un indice de groupes hydroxy dans la plage de 15 à 500.

5. Procédé selon une ou plusieurs des revendications 1 à 4, dans lequel l'agent d'adhérence consiste en au moins un composé choisi dans le groupe constitué par des polyétherpolyols (B.1).

6. Procédé selon la revendication 1, dans lequel on applique l'agent d'adhérence sur la couche de recouvrement en une quantité de $\geq 20$ g/m$^2$ à $\leq 50$ g/m$^2$.

7. Procédé selon la revendication 1, dans lequel avant l'application de l'agent d'adhérence on chauffe la couche de recouvrement jusqu'à une température de $\geq 20$ °C à $\leq 70$ °C.

8. Procédé selon la revendication 1, dans lequel la couche de mousse peut être obtenue à partir de la réaction d'un polyisocyanate et d'au moins un composé choisi dans le groupe consistant en un mélange réactionnel comprenant des polyesterpolyols et polyétherpolyols, le rapport molaire des groupes isocyanate aux groupes hydroxy dans le mélange réactionnel au début de la réaction valant $\geq 100{:}100$ à $\leq 400{:}100$.

9. Procédé selon la revendication 1, dans lequel la densité apparente de la couche de mousse vaut de $\geq 30$ g/l à $\leq 48$ g/l.

10. Élément composite à base de mousse, contenant les couches ($\alpha$) une couche de recouvrement, ($\beta$) un agent d'adhérence consistant en au moins un composé du groupe constitué par un polyétherpolyol (B.1), une dispersion de polyurée (B.3), un polyesterpolyol (B.4), et ($\gamma$) une couche de mousse comprenant du polyuréthane et/ou du polyisocyanurate, les couches étant disposées dans l'ordre ($\alpha$)-($\beta$)-($\gamma$) et le polyétherpolyol (B.1) étant choisi parmi au moins un composé choisi dans le groupe constitué par des polyoxypropylènepolyols, polyoxypropylène-polyoxyéthylènepolyols et polyéthercarbonatepolyols.

11. Élément composite à base de mousse selon la revendication 10, dans lequel les couches sont disposées dans l'ordre ($\alpha$)-($\beta$)-($\gamma$)-($\beta$)-($\alpha$).

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1516720 A1
- EP 1593438 A2
- US 4089835 A
- US 4260530 A

**In der Beschreibung aufgeführte Nicht-Patentliteratur**

- **INOUE et al.** Copolymerization of Carbon Dioxide and Epoxide with Organometallic Compounds. *Die Makromolekulare Chemie,* 1969, vol. 130, 210-220